# EUROPEAN PATENT SPECIFICATION

(11) **EP 4 533 199 B1**
(45) Date of publication and mention of the grant of the patent: **25.11.2026**
(21) Application number: 23721033.1
(22) Date of filing: 25.04.2023
(51) Int. Cl.: G05D 1/00

(54) **ENHANCED DRIVE MOTOR CONTROL IN A ROBOTIC LAWNMOWER**
VERBESSERTE ANTRIEBSMOTORSTEUERUNG IN EINEM ROBOTER-RASENMÄHER
CONTRÔLE AMÉLIORÉ DU MOTEUR D'ENTRAÎNEMENT DANS UNE TONDEUSE À GAZON ROBOTISÉE

(30) Priority: 03.06.2022 SE 2250671
(43) Date of publication of application: 09.04.2025
(73) Proprietor: Husqvarna AB, 561 82 Huskvarna (SE)
(72) Inventor: GOMÉR, Dan, 561 38 HUSKVARNA (SE); HAMMARSTRÖM, Martin, 553 38 JÖNKÖPING (SE)
(86) International application number: PCT/SE2023/050383
(87) International publication number: WO 2023/234820

(56) References cited:
- US-A1- 2019 204 847
- US-A1- 2021 072 766
- US-A1- 2021 293 948

## Description

### TECHNICAL FIELD

The present disclosure relates to a robotic lawnmower control unit arrangement that is adapted to control at least one radar transceiver comprised in a robotic lawnmower and to control a drive motor arrangement of the robotic lawnmower at least partly in dependence of analysis of information acquired by means of said radar transceiver.

### BACKGROUND

Robotic work tools such as for example robotic lawnmowers are becoming increasingly more popular. In a typical deployment work area, such as a garden, the work area is enclosed by a boundary wire with the purpose of keeping the robotic lawnmower inside the work area. An electric control signal may be transmitted through the boundary wire thereby generating an (electro-) magnetic field emanating from the boundary wire. The robotic lawnmower is typically arranged with one or more sensors adapted to sense the control signal.

Alternatively, or as a supplement, the robotic lawnmower can be equipped with a navigation system that is adapted for satellite navigation as well as navigation by means of a local base station. The robotic lawnmower may further comprise other sensors, for example one or more environment detection sensors such as radar, Lidar and ultrasonic sensors, and one or more collision detection sensors.

The robotic lawnmower is adapted to cut grass on a user's lawn automatically and can be charged automatically via charging skids at a charging station and/or by means of solar cells without intervention of the user, and does normally not need to be manually managed after being set once. The robotic lawnmower may need to have a function of detecting obstacles to avoid colliding with an obstacle before encountering the obstacle, and to have a function of recognizing that a collision has occurred.

In the latter case, a collision sensor can be disposed on the body of the robotic lawnmower, and when the robotic lawnmower collides with an obstacle, the body moves in such a way that the collision sensor generates a collision signal. In the former case, different kinds of environment detection sensors are used such as ultrasonic sensors as disclosed in EP 3508048 and radar sensors as disclosed in SE 540794. Lidar sensors can of course also be used, as well as combinations of different types of environment detection sensors.

US 2021/072766 A1 discloses an autonomous mobile cleaning robot, comprising: a radar sensor configured to scan a surface, during a movement of the robot along the surface, by transmitting radar signals towards the surface and acquiring, at different positions along said movement, radar responses from the surface. The robot comprises a radar signal processor configured to extract one or more features of each acquired radar response from the surface, and a controller configured to control an operation of the robot based on the extracted one or more features.

If the robotic lawnmower collides with an object or a boundary, and a collision detection sensor fails to detect this, the wheels keep on turning, especially if the grass is wet. This means that the robotic lawnmower stands still and the wheels are spinning on the wet grass, or e.g. dry soil with a lot of sand which gives no wheel grip. Prolonged spinning can cause the robotic lawnmower to dig into the ground which may introduce problems when after some predetermined time, e.g. 1 minute, a scheduled turn is induced. The robotic lawnmower might then become stuck and the turn cannot be performed, resulting in that the robotic lawnmower becomes non-operational and requires manual handling.

It is therefore desired to provide means for an efficient and reliable detection of that a robotic lawnmower stands still and the wheels are spinning when a collision detection sensor has failed to detect that an object has been encountered.

### SUMMARY

The object of the present disclosure is to provide means for an efficient and reliable detection of that a robotic lawnmower stands still and the wheels are spinning when a collision detection sensor has failed to detect that an object has been encountered.

This object is achieved by means of a robotic lawnmower control unit arrangement that is adapted to control at least one radar transceiver comprised in a robotic lawnmower to transmit a plurality of transmitted radar signal waveforms and to receive a plurality of reflected radar signal waveforms where the transmitted radar signal waveforms have been reflected by an object, and to sample a plurality of received radar signal waveforms with at least one sample point for each received radar signal waveform. The control unit arrangement is further adapted to analyze sample points as a function of amplitude and time, and to control a drive motor arrangement of the robotic lawnmower to move the robotic lawnmower in a second direction when the control unit arrangement has determined that an amplitude change between corresponding sample points for different received radar signal waveforms falls below a threshold, indicating that the robotic lawnmower is not moving, when the drive motor arrangement is controlled to move the robotic lawnmower in a first direction, different from the second direction.

In this way, it can quickly be determined that the robotic lawnmower is stuck against an object while the drive wheels are spinning, enabling its movement direction to be changed before the drive wheels dig into the ground. The robotic lawnmower can then come free from the object automatically, without the need of any user actions.

According to some aspects, the control unit arrangement comprises a sampling unit and is adapted to analyze information acquired by means of the radar transceivers by means of sample points acquired by the sampling unit that is adapted to provide sample points by sampling a plurality of received radar signal waveforms with at least one sample point for each received radar signal waveform.

According to some aspects, the control unit arrangement is adapted to halt normal operation of the robotic lawnmower before controlling the drive motor arrangement to move the robotic lawnmower in the second direction.

This means that there is a predetermined efficient course of action in case it is determined that the robotic lawnmower is not moving while the drive wheels are spinning.

According to some aspects, the control unit arrangement is adapted to perform analysis of power spectral density over time for the sample points for different received radar signal waveforms such that the current type of ground material can be determined.

This means that the same radar transceiver and the same analysis that is performed to determine the current type of ground material can be used to determine that the robotic lawnmower is stuck against an object while the drive wheels are spinning.

This object is also achieved by means of methods, a robotic lawnmower comprising a control unit arrangement according to the above, computer program products comprising a computer program according to the above methods, and computer readable storage mediums on which the computer program is stored. These are all associated with the above advantages.

### BRIEF DESCRIPTION OF THE DRAWINGS

The present disclosure will now be described more in detail with reference to the appended drawings, where:
- Figure 1: shows a schematic perspective side view of a robotic lawnmower;
- Figure 2: shows a schematic overview of the robotic lawnmower;
- Figure 3: shows a schematic top view of the robotic lawnmower;
- Figurer 4: shows a schematic detail side view of a radar transceiver in the robotic lawnmower;
- Figure 5: shows received radar signal waveforms for a detected object that moves away from the radar transceiver;
- Figure 6: shows a re-constructed received radar signal waveform as a function of time, corresponding to the received radar signal waveforms in Figure 5;
- Figure 7: shows received radar signal waveforms for a detected object that is essentially stationary with respect to the radar transceiver;
- Figure 8: shows a re-constructed received radar signal waveform as a function of time, corresponding to the received radar signal waveforms in Figure 7;
- Figure 9: shows a schematic top view of the robotic lawnmower having encountered an obstacle;
- Figure 10: shows a schematic top view of the robotic lawnmower having moved away from the obstacle;
- Figure 11: shows a computer program product; and
- Figure 12: shows a flow chart illustrating methods according to the present disclosure.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

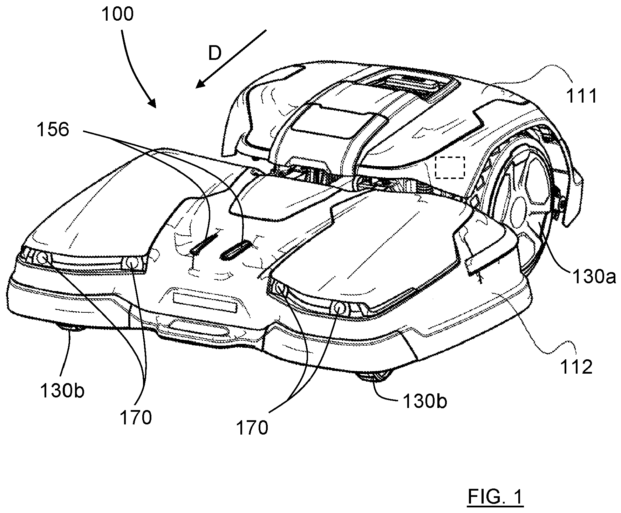

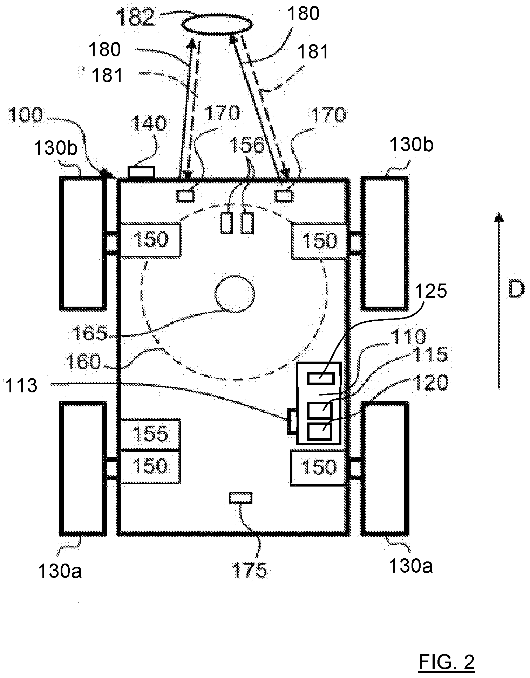

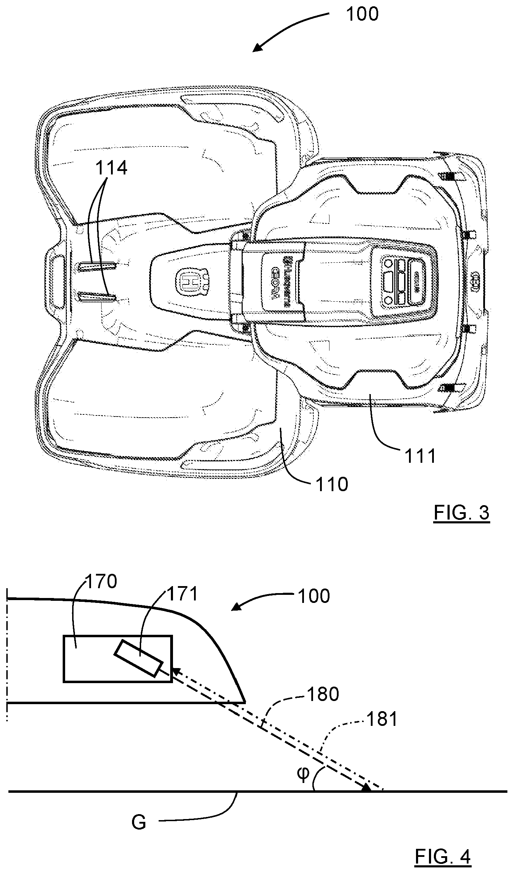

Figure 1 shows a perspective view of a robotic lawnmower 100, Figure 2 shows a schematic overview of the robotic lawnmower 100 and Figure 3 shows a top view of the robotic lawnmower 100. The robotic lawnmower 100 is adapted for a forward travelling direction D, has a body 111, 112 and a plurality of wheels 130; in this example the robotic lawnmower 100 has four wheels 130, two front wheels and two rear wheels. The robotic lawnmower 100 comprises a control unit arrangement 110 and at least one electric motor 150 that constitutes a drive motor arrangement 150, where at least some of the wheels 130 are drivably connected to at least one electric motor 150 of the drive motor arrangement 150.

It should be noted that even if the description herein is focused on electric motors, combustion engines may alternatively be used in combination with an electric motor arrangement.

The robotic lawnmower 100 may be a multi-chassis type or a mono-chassis type. A multi-chassis type comprises more than one body parts that are movable with respect to one another. A mono-chassis type comprises only one main body part. In this example embodiment, the robotic lawnmower 100 is of a multi-chassis type, having a first body part 111 and a second body part 112, which body parts 111, 112 substantially house all components of the robotic lawnmower 100.

It should be noted that even if the description herein is focused on electric motors, combustion engines may alternatively be used in combination with an electric motor arrangement.

The robotic lawnmower 100 also comprises a grass cutting device 160, such as a rotating blade 160 driven by a cutter motor 165. The robotic lawnmower 100 also has at least one rechargeable electric power source such as a battery 155 for providing power to the drive motor arrangement 150 and/or the cutter motor 165. The battery 155 is arranged to be charged by means of received charging current from a charging station of a previously well-known kind, received through charging skids 156 or other suitable charging connectors. Solar cells can also be used for producing an electric charging current, and can be provided at the robotic lawn mower. This can be a complement to a charging station.

According to some aspects, the drive motor arrangement 150 is connected to two wheels 130a which constitute drive wheels, where the other wheels may be swivelable wheels 130b that are not connected to a motor. Then the drive motor arrangement 150 is adapted to drive the drive wheels 130a in the same rotation direction, or in different rotation directions, and at different rotational speeds in order to control the speed and direction of the robotic lawnmower's movement. According to some aspects, the drive motor arrangement 150 comprises two separate electrical motors, and according to some further aspects each such electric motor is mounted to a corresponding drive wheel 130a, for example in a corresponding drive wheel hub.

As illustrated in Figure 2, as an alternative, there may be one electric motor for each wheel 130a, 130b.

In one embodiment, the robotic lawnmower 100 may further comprise at least one navigation sensor arrangement 175. The robotic lawnmower 100 further comprises radar transceivers 170 adapted to transmit radar signal waveforms 180 and to receive reflected radar signal waveforms 181 that have been reflected by an object 182. To enable this, according to some aspects, each radar transceiver 170 comprises a corresponding transmitter arrangement and receiver arrangement together with other necessary circuitry in a well-known manner.

For this purpose, the control unit arrangement 110 is adapted to control the radar transceivers 170 to transmit a plurality of transmitted radar signal waveforms 180 and to receive a plurality of reflected radar signal waveforms 181a, 181b, 181c; 181d, 181e, 181f where the transmitted radar signal waveforms have been reflected by an object 182.

The control unit arrangement 110 is adapted to analyze information that has been acquired by means of the radar transceivers 170. The control unit arrangement 110 is further adapted to control the drive motor arrangement 150 of the robotic lawnmower 100, at least partly in dependence of the analyzed information, such that speed and direction of the robotic lawnmower 100 is controlled. The control unit arrangement 110 can be constituted by several separate control sub-units or one single integrated control unit. The control unit arrangement 110 is adapted to perform all necessary signal processing necessary for controlling the radar transceivers 170 and to acquire the desired information from the detected measurement results.

Radar transceivers can be used for detecting objects and obstacles in advance, preventing collisions to occur. Radar transceivers can also be used for detecting the ground in front of the robotic lawn mower such that characteristics of the ground in front of the robotic lawn mower can be determined, which will be discussed in the following.

The vehicle lawnmower may according to some aspects also comprise at least one collision detection sensor 140 that for example may be integrated with the body parts 111, 112, such when a body part 111, 112 is displaced, a collision with an external object is detected.

If the robotic lawnmower 100 collides with an object 182 and the collision detection sensor 140 fails to detect this which results in that the drive wheels 130a keep on turning, especially in case the grass is wet. This means that the robotic lawnmower 100 stands still and the drive wheels 130a are spinning on the wet grass. This may happen on other surfaces such as for example dry soil with a lot of sand which gives no driving wheel grip. Prolonged spinning can cause the drive wheels 130a to dig into the ground such that tracks are formed which may introduce problems when after some predetermined time, e.g. 1 minute, a scheduled turn is induced. The robotic lawnmower 100 might then become stuck due to the formed tracks and the turn cannot be performed, resulting in that the robotic lawnmower 100 becomes non-operational.

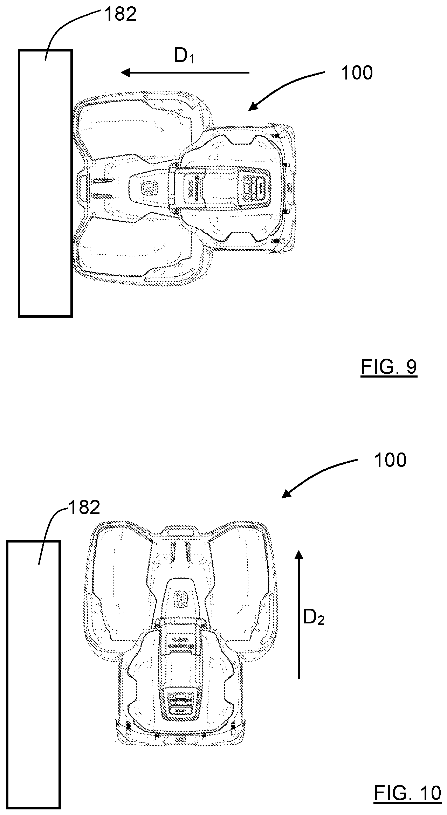

According to the present disclosure, with reference also to Figure 9 and Figure 10, the control unit arrangement 110 is adapted to control the drive motor arrangement 150 to move the robotic lawnmower 100 in a second direction D₂ when the control unit arrangement 110 has determined that the analyzed information indicates that the robotic lawnmower 100 is not moving when the drive motor arrangement 150 is controlled to move the robotic lawnmower 100 in a first direction D₁, different from the second direction D₂. More details regarding the analyzed information are provided below.

This means that when the control unit arrangement 110 has determined that the analyzed information indicates that the robotic lawnmower 100 is not moving when it should be moving, this is probably due to that the robotic lawnmower 100 is stuck, for example by hitting an obstacle 182 or by the drive wheels 130a not having a sufficient grip against the ground G, or a combination. The control unit arrangement 110 then tries to change movement direction, for example by controlling the drive motor arrangement 150 to steer the robotic lawnmower 100 away.

In this way, it can quickly be determined that the robotic lawnmower is stuck against an object while the drive wheels 130a are spinning, enabling its movement direction to be changed before the drive wheels dig into the ground. The robotic lawnmower can then come free from the object automatically, without the need for any user actions.

It is assumed that if a collision sensor 140 is comprised in the robotic lawnmower 100, the collision sensor 140 has failed to detect a collision, for example due to malfunction or unsuitable circumstances.

There are many ways for the control unit arrangement 110 to determine that the robotic lawnmower 100 is moving or not by means of analysis of information that has been acquired by means of the radar transceivers 170, in the following one example is provided.

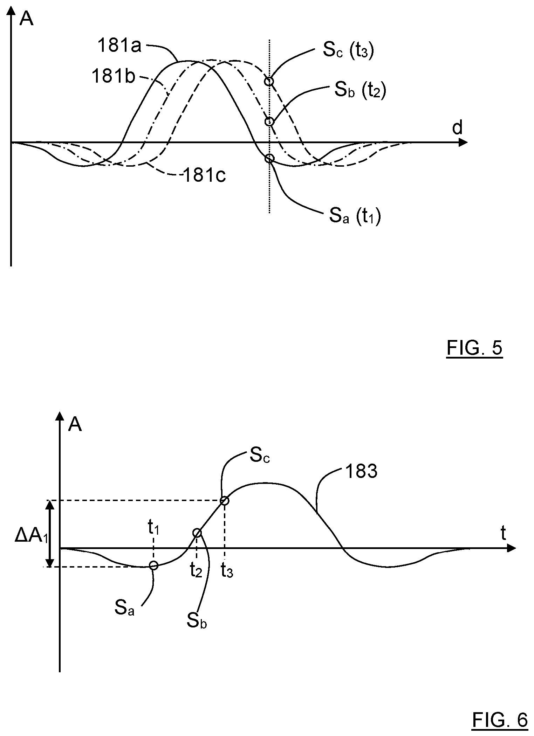

According to some aspects, with reference also to Figure 5 - Figure 8, the control unit arrangement 110 comprises a sampling unit 125 and is adapted to analyze information acquired by means of the radar transceivers 170 by means of sample points acquired by the sampling unit 125. The sampling unit 125 is adapted to provide sample points Sₐ, S_{b}, S_{c}; S_{d}, Sₑ, S_{f} by sampling a plurality of received radar signal waveforms 181a, 181b, 181c; 181d, 181e, 181f with at least one sample point Sₐ, S_{b}, S_{c}; S_{d}, Sₑ, S_{f} for each received radar signal waveform 181a, 181b, 181c; 181d, 181e, 181f.

Figure 5 shows the amplitude A of received radar signal waveforms 181a, 181b, 181c for a detected object 182 that moves away from the radar transceivers 170, the amplitude A being a function of a distance d between the radar transceivers 170 and the detected object 182. This means that the received radar signal waveforms 181a, 181b, 181c have been reflected by an object that has a relative movement with respect to the radar transceivers 170, the distance between the radar transceivers 170 and the object 182 increasing over time.

Figure 6 shows the amplitude A of a re-constructed received radar signal waveform as a function of time, corresponding to the received radar signal waveforms 181a, 181b, 181c in Figure 5. Here, the sample points Sₐ, S_{b}, S_{c} are distributed in time and amplitude, and there is a certain first amplitude change ΔA₁ over time.

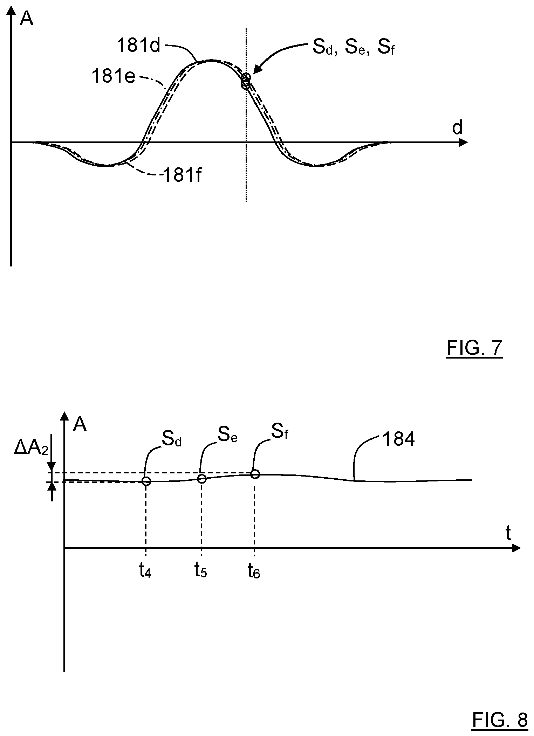

Figure 7 shows the amplitude A of received radar signal waveforms 181d, 181e, 181f for a detected object 182 that is relatively stationary relative the radar transceivers 170, the amplitude A being a function of a distance d between the radar transceivers 170 and the detected object 182. This means that the received radar signal waveforms 181d, 181e, 181f have been reflected by an object that has a relatively small movement with respect to the radar transceivers 170. This small movement can be due to a robotic lawn mower 100 that has collided with the object 182, and that the drive wheels 130a are spinning, causing a vibrating or toggling motion of the robotic lawn mower's body 111, 112.

Figure 8 shows the amplitude A of a re-constructed received radar signal waveform as a function of time, corresponding to the received radar signal waveforms 181d, 181e, 181f in Figure 7. Here, the sample points S_{d}, Sₑ, S_{f} are distributed in time and amplitude, and there is a certain second amplitude change ΔA₂ over time. Since the detected object 182 is relatively stationary relative the radar transceivers 170, the second amplitude change ΔA₂ falls below the first amplitude change ΔA₁. It follows that in case the object does not move at all with respect to the radar transceivers 170, the second amplitude change ΔA₂ over time is zero.

The control unit arrangement 110 is adapted to sample a plurality of received radar signal waveforms 181a, 181b, 181c; 181d, 181e, 181f with at least one sample point Sₐ, S_{b}, S_{c}; S_{d}, Sₑ, S_{f} for each received radar signal waveform 181a, 181b, 181c; 181d, 181e, 181f and to analyze the sample points Sₐ, S_{b}, S_{c}; S_{d}, Sₑ, S_{f} as a function of amplitude and time 170. The control unit arrangement 110 is further adapted to control a drive motor arrangement 150 of the robotic lawnmower 100 to move the robotic lawnmower 100 in a second direction D₂ when the control unit arrangement 110 has determined that an amplitude change ΔA₁, ΔA₂ between corresponding sample points Sₐ, S_{b}, S_{c}; S_{d}, Sₑ, S_{f} for different received radar signal waveforms 181a, 181b, 181c; 181d, 181e, 181f falls below a threshold, indicating that the robotic lawnmower 100 is not moving when the drive motor arrangement 150 is controlled to move the robotic lawnmower 100 in a first direction D₁, different from the second direction D₂.

In this way, it can be determined, in an efficient and relatively uncomplicated manner, that the robotic lawnmower is not moving.

According to some aspects, the control unit arrangement 110 is adapted to halt normal operation of the robotic lawnmower 100 before controlling the drive motor arrangement 150 to move the robotic lawnmower 100 in the second direction D₂ as shown in Figure 10. The second direction can differ from the first direction D₂ with at least 90º, enabling the robotic lawnmower 100 to clear the obstacle.

In Figure 2 it is schematically illustrated, in terms of a number of functional units, the components of the control unit arrangement 110 according to embodiments of the discussions herein. Processing circuitry 115 is provided using any combination of one or more of a suitable central processing unit CPU, multiprocessor, microcontroller, digital signal processor DSP, etc., capable of executing software instructions stored in a computer program product, e.g. in the form of a storage medium 120. The processing circuitry 115 may further be provided as at least one application specific integrated circuit ASIC, or field programmable gate array FPGA. The processing circuitry 115 thus comprises a plurality of digital logic components.

Particularly, the processing circuitry 115 is configured to cause the control unit arrangement 110 to perform a set of operations, or steps to control the operation of the robotic lawnmower 1 including, but not being limited to, controlling the radar transceivers 170, processing measurements results received via the radar transceivers 170, and the propulsion of the robotic lawnmower 100. For example, the storage medium 120 may store the set of operations, and the processing circuitry 115 may be configured to retrieve the set of operations from the storage medium 120 to cause the control unit arrangement 110 to perform the set of operations. The set of operations may be provided as a set of executable instructions. Thus, the processing circuitry 115 is thereby arranged to execute methods as herein disclosed.

The storage medium 120 may also comprise persistent storage, which, for example, can be any single one or combination of magnetic memory, optical memory, solid state memory or even remotely mounted memory.

According to some aspects, the control unit arrangement 110 further comprises an interface 113 for communications with at least one external device such as a control panel or an external device. As such the interface 113 may comprise one or more transmitters and receivers, comprising analogue and digital components and a suitable number of ports for wireline communication. The interface 113 can be adapted for communication with other devices, such as a server, a personal computer or smartphone, the charging station, and/or other robotic working tools. Examples of such wireless communication devices are Bluetooth^{®}, WiFi^{®} (IEEE802.11b), Global System Mobile (GSM) and LTE (Long Term Evolution), to name a few.

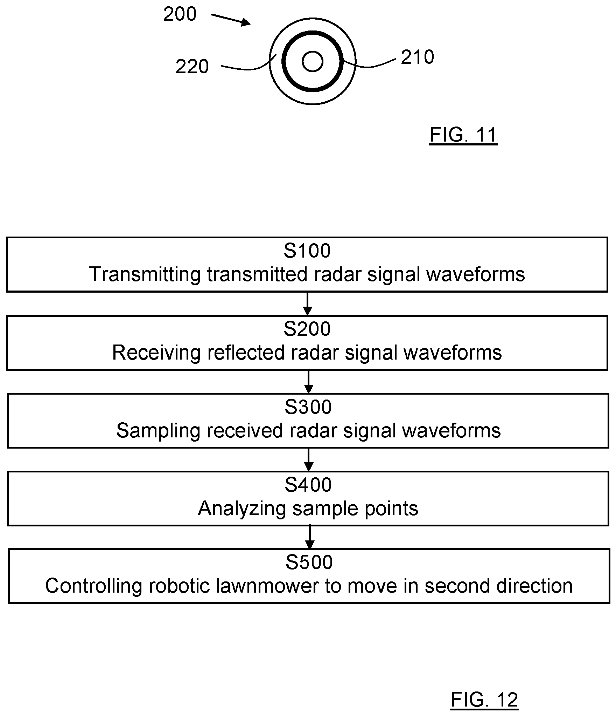

Figure 11 shows a computer program product 200 comprising computer executable instructions 210 stored on media 220 to execute any of the methods disclosed herein.

The present disclosure relates to a computer program 210 for controlling a robotic lawnmower 100. The computer program 210 comprises computer code which, when run on processing circuitry 115 of a control unit arrangement 110, causes the control unit arrangement 110 to perform the methods described herein.

The present disclosure also relates to robotic lawnmower 100 comprising at least one radar transceiver 170, a drive motor arrangement 150, and a control unit arrangement 110 according to the above.

According to some aspects, at least one radar transceiver 170 comprises a corresponding antenna arrangement 171 that is directed at an angle φ to a ground level G such that a transmitted radar signal 180 is directed at the angle φ to the ground level G.

With reference to Figure 12, the present disclosure also relates to a method for controlling a robotic lawnmower 100. transmitting S100 a plurality of transmitted radar signal waveforms 180, receiving S200 a plurality of reflected radar signal waveforms 181a, 181b, 181c; 181d, 181e, 181f where the transmitted radar signal waveforms have been reflected by an object 182, and sampling S300 a plurality of received radar signal waveforms 181a, 181b, 181c; 181d, 181e, 181f with at least one sample point Sₐ, S_{b}, S_{c}; S_{d}, Sₑ, S_{f} for each received radar signal waveform 181a, 181b, 181c; 181d, 181e, 181f. The method further comprises analyzing S400 the sample points Sₐ, S_{b}, S_{c}; S_{d}, Sₑ, S_{f} as a function of amplitude and time 170, and controlling S500 the robotic lawnmower 100 to move in a second direction D₂ when having determined that an amplitude change ΔA₁, ΔA₂ between corresponding sample points Sₐ, S_{b}, S_{c}; S_{d}, Sₑ, S_{f} for different received radar signal waveforms 181a, 181b, 181c; 181d, 181e, 181f falls below a threshold, indicating that the robotic lawnmower 100 is not moving, when the drive motor arrangement 150 is controlled to move the robotic lawnmower 100 in a first direction D₁, different from the second direction D₂.

According to some aspects the method comprises halting normal operation of the robotic lawnmower 100 before controlling the robotic lawnmower 100 to move in the second direction D₂.

According to some aspects, the method comprises analyzing power spectral density over time for the sample points Sₐ, S_{b}, S_{c}; S_{d}, Sₑ, S_{f} for different received radar signal waveforms 181a, 181b, 181c; 181d, 181e, 181f such that the current type of ground material can be determined. This means that the same radar transceiver 170 and the same analysis that is performed to determine the current type of ground material can be used to determine that the robotic lawnmower 100 is stuck against an object while the drive wheels are spinning. This of course provides a high degree of efficiency since an existing radar transceiver 170 and an analysis for the received radar signal waveforms 181a, 181b, 181c; 181d, 181e, 181f can be used for two different purposes.

The present disclosure is not limited to the examples provided above, but may vary within the scope of the appended claims. For example, the control unit arrangement 110 can be implemented as one integrated unit that for example may include the sampling unit 125, or as several separate units. According to some aspects, parts of the control unit arrangement 110 can be comprised in at least one radar transceiver 170. For example, the sampling unit 125 can be comprised in at least one radar transceiver 170. There can also be several radar transceivers where each radar transceiver comprises a separate sampling unit, the sampling unit 125 then being regarded as a sampling unit arrangement.

With reference also to Figure 4 that shows a schematic detail side view of a radar transceiver 170 in the robotic lawnmower 100, each radar transceiver 170 comprises a corresponding antenna arrangement 171, and as shown in Figure 4, at least one antenna arrangement 171 is directed at an angle φ to a ground level G. This means that a transmitted radar signal 180 is directed at the angle φ to the ground level G, which corresponds to that a corresponding antenna beam has a pointing direction that is directed at the angle φ to the ground level G. According to some aspects, the angle φ lies in the interval 30º-50º, and more preferably in the interval 40º-50º.

In this manner, the control unit arrangement 110 is adapted to perform analysis of a received reflected signal 181 such that the current type of ground material can be determined. In particular, the control unit arrangement 110 is adapted to perform analysis of specific features of the generated power spectral densities over time for the received reflected signal 181. In this manner, it can for example be determined whether the robotic lawnmower 100 is moving on grass or not. In other words, the control unit arrangement 110 is adapted to perform analysis of power spectral density over time for the sample points Sₐ, S_{b}, S_{c}; S_{d}, Sₑ, S_{f} for different received radar signal waveforms 181a, 181b, 181c; 181d, 181e, 181f such that the current type of ground material can be determined.

When determining the characteristics of the ground G in front of the robotic lawn mower 100, it is suitable that the radar antenna arrangement is directed at an angle φ to a ground level G, where this angle preferable lies in the interval 30º-50º, and more preferably lies in the interval 40º-50º. When using an antenna arrangement for determining that the robotic lawn mower 100 is not moving, this angle can be chosen more freely. However, when the same antenna arrangement 171 is used for determining the characteristics of the ground G in front of the robotic lawn mower 100 and for determining that the robotic lawn mower 100 is not moving, this angle φ is suitably chosen in said interval. Larger intervals are also conceivable, as discussed previously.

By means of the present disclosure, the sample points Sₐ, S_{b}, S_{c}; S_{d}, Sₑ, S_{f} as a function of amplitude and time, a spectral analysis of the sample points Sₐ, S_{b}, S_{c}; S_{d}, Sₑ, S_{f} and the corresponding received radar signal waveform 181a, 181b, 181c; 181d, 181e, 181f can be performed. The spectral analysis can reveal characteristics of the ground G in front of the robotic lawn mower 100 as well as if the robotic lawn mower 100 can be determined to be moving or not. This is due to the spectral characteristics that can be regarded as a spectral fingerprint that is indicative of a type of ground G in front of the robotic lawn mower 100 as well as of if the robotic lawn mower 100 can be determined to be moving or not.

## Claims

1. A robotic lawnmower control unit arrangement (110) that is adapted to
- control at least one radar transceiver (170) comprised in a robotic lawnmower (100) to transmit a plurality of transmitted radar signal waveforms (180) and to receive a plurality of reflected radar signal waveforms (181a, 181b, 181c; 181d, 181e, 181f) where the transmitted radar signal waveforms have been reflected by an object (182),
- sample a plurality of received radar signal waveforms (181a, 181b, 181c; 181d, 181e, 181f) with at least one sample point (Sₐ, S_{b}, S_{c}; S_{d}, Sₑ, Sf) for each received radar signal waveform (181a, 181b, 181c; 181d, 181e, 181f),
- analyze the sample points (Sₐ, S_{b}, S_{c}; S_{d}, Sₑ, S_{f}) as a function of amplitude and time, and to
- control a drive motor arrangement (150) of the robotic lawnmower (100) to move the robotic lawnmower (100) in a second direction (D₂) when the control unit arrangement (110) has determined that an amplitude change (ΔA₁, ΔA₂) between corresponding sample points (Sₐ, S_{b}, S_{c}; S_{d}, Sₑ, S_{f}) for different received radar signal waveforms (181a, 181b, 181c; 181d, 181e, 181f) falls below a threshold, indicating that the robotic lawnmower (100) is not moving, when the drive motor arrangement (150) is controlled to move the robotic lawnmower (100) in a first direction (D₁), different from the second direction (D₂).

2. The robotic lawnmower control unit arrangement (110) according to claim 1, wherein the control unit arrangement (110) comprises a sampling unit (125) that is adapted to provide the sample points (Sₐ, S_{b}, S_{c}; S_{d}, Sₑ, S_{f}) by sampling a plurality of received radar signal waveforms (181a, 181b, 181c; 181d, 181e, 181f) with at least one sample point (Sₐ, S_{b}, S_{c}; S_{d}, Sₑ, S_{f}) for each received radar signal waveform (181a, 181b, 181c; 181d, 181e, 181f).

3. The robotic lawnmower control unit arrangement (110) according to any one of the claims 1 or 2, wherein the control unit arrangement (110) is adapted to halt normal operation of the robotic lawnmower (100) before controlling the drive motor arrangement (150) to move the robotic lawnmower (100) in the second direction (D₂).

4. The robotic lawnmower control unit arrangement (110) according to any one of the previous claims, wherein the control unit arrangement (110) is adapted to perform analysis of power spectral density over time for the sample points (Sₐ, S_{b}, S_{c}; S_{d}, Sₑ, S_{f}) for different received radar signal waveforms (181a, 181b, 181c; 181d, 181e, 181f) such that the current type of ground material can be determined.

5. A robotic lawnmower (100) comprising at least one radar transceiver (170), a drive motor arrangement (150), and a control unit arrangement (110) according to any one of the claims 1-4.

6. The robotic lawnmower (100) according to claim 5, where in at least one radar transceiver (170) comprises a corresponding antenna arrangement (171) that is directed at an angle (φ) to a ground level (G) such that a transmitted radar signal (180) is directed at the angle (φ) to the ground level (G), where the angle (φ) lies in the interval 30°-50°, and more preferably in the interval 40°-50°.

7. A method for controlling a robotic lawnmower (100), the method comprising
transmitting (S100) a plurality of transmitted radar signal waveforms (180);
receiving (S200) a plurality of reflected radar signal waveforms (181a, 181b, 181c; 181d, 181e, 181f) where the transmitted radar signal waveforms have been reflected by an object (182);
sampling (S300) a plurality of received radar signal waveforms (181a, 181b, 181c; 181d, 181e, 181f) with at least one sample point (Sₐ, S_{b}, S_{c}; S_{d}, Sₑ, S_{f}) for each received radar signal waveform (181a, 181b, 181c; 181d, 181e, 181f);
analyzing (S400) the sample points (Sₐ, S_{b}, S_{c}; S_{d}, Sₑ, S_{f}) as a function of amplitude and time; and
controlling (S500) the robotic lawnmower (100) to move in a second direction (D₂) when having determined that an amplitude change (ΔA₁, ΔA₂) between corresponding sample points (Sₐ, S_{b}, S_{c}; S_{d}, Sₑ, S_{f}) for different received radar signal waveforms (181a, 181b, 181c; 181d, 181e, 181f) falls below a threshold, indicating that the robotic lawnmower (100) is not moving, when the drive motor arrangement (150) is controlled to move the robotic lawnmower (100) in a first direction (D₁), different from the second direction (D₂).

8. The method according to claim 7, wherein the method comprises halting normal operation of the robotic lawnmower (100) before controlling the robotic lawnmower (100) to move in the second direction (D₂).

9. The method according to any one of the claims 7 or 8, wherein the method comprises analyzing power spectral density over time for the sample points (Sₐ, S_{b}, S_{c}; S_{d}, Sₑ, S_{f}) for different received radar signal waveforms (181a, 181b, 181c; 181 d, 181e, 181f) such that the current type of ground material can be determined.

10. A computer program (210) for controlling a robotic lawnmower (100), where the computer program (210) comprises computer code which, when run on processing circuitry (115) of a control unit arrangement (110), causes the control unit arrangement (110) to perform the method according to any one of the claims 7-9.

11. A computer program product (200) comprising a computer program (210) according to claim 10, and a computer readable storage medium (220) on which the computer program is stored.

## Patentansprüche

1. Roboterrasenmähersteuereinheitsanordnung (110), die angepasst ist zum
- Steuern mindestens eines Radarsendeempfängers (170), der in einem Roboterrasenmäher (100) umfasst ist, um eine Vielzahl von gesendeten Radarsignalwellenformen (180) zu senden und um eine Vielzahl von reflektierten Radarsignalwellenformen (181a, 181b, 181c; 181d, 181e, 181f) zu empfangen, wobei die gesendeten Radarsignalwellenformen durch ein Objekt (182) reflektiert wurden,
- Abtasten einer Vielzahl von empfangenen Radarsignalwellenformen (181a, 181b, 181c; 181d, 181e, 181f) mit mindestens einem Abtastpunkt (Sₐ, S_{b}, S_{c}; S_{d}, Sₑ, S_{f}) für jede empfangene Radarsignalwellenform (181a, 181b, 181c; 181d, 181e, 181f),
- Analysieren der Abtastpunkte (Sₐ, S_{b}, S_{c}; S_{d}, Sₑ, S_{f}) als eine Funktion von Amplitude und Zeit, und zum
- Steuern einer Antriebsmotoranordnung (150) des Roboterrasenmähers (100), um den Roboterrasenmäher (100) in eine zweite Richtung (D₂) zu bewegen, wenn die Steuereinheitsanordnung (110) bestimmt hat, dass eine Amplitudenänderung (ΔA₁, ΔA₂) zwischen entsprechenden Abtastpunkten (Sₐ, S_{b}, S_{c}; S_{d}, Sₑ, S_{f}) für unterschiedliche empfangene Radarsignalwellenformen (181a, 181b, 181c; 181d, 181e, 181f) unter einen Schwellenwert fällt, was anzeigt, dass sich der Roboterrasenmäher (100) nicht bewegt, wenn die Antriebsmotoranordnung (150) gesteuert wird, um den Roboterrasenmäher (100) in eine erste Richtung (D₁) zu bewegen, die sich von der zweiten Richtung (D₂) unterscheidet.

2. Roboterrasenmähersteuereinheitsanordnung (110) nach Anspruch 1, wobei die Steuereinheitsanordnung (110) eine Abtasteinheit (125) umfasst, die angepasst ist, um die Abtastpunkte (Sₐ, S_{b}, S_{c}; S_{d}, Sₑ, S_{f}) durch Abtasten einer Vielzahl von empfangenen Radarsignalwellenformen (181a, 181b, 181c; 181d, 181e, 181f) mit mindestens einem Abtastpunkt (Sₐ, S_{b}, S_{c}; S_{d}, Sₑ, S_{f}) für jede empfangene Radarsignalwellenform (181a, 181b, 181c; 181d, 181e, 181f) bereitzustellen.

3. Roboterrasenmähersteuereinheitsanordnung (110) nach einem der Ansprüche 1 oder 2, wobei die Steuereinheitsanordnung (110) angepasst ist, um einen Normalbetrieb des Roboterrasenmähers (100) anzuhalten, bevor die Antriebsmotoranordnung (150) gesteuert wird, um den Roboterrasenmäher (100) in die zweite Richtung (D₂) zu bewegen.

4. Roboterrasenmähersteuereinheitsanordnung (110) nach einem der vorstehenden Ansprüche, wobei die Steuereinheitsanordnung (110) angepasst ist, um eine Analyse einer Leistungsspektraldichte im Laufe der Zeit für die Abtastpunkte (Sₐ, S_{b}, S_{c}; S_{d}, Sₑ, S_{f}) für unterschiedliche empfangene Radarsignalwellenformen (181a, 181b, 181c; 181d, 181e, 181f) derart durchzuführen, dass die aktuelle Art von Bodenmaterial bestimmt werden kann.

5. Roboterrasenmäher (100), umfassend mindestens einen Radarsendeempfänger (170), eine Antriebsmotoranordnung (150) und eine Steuereinheitsanordnung (110) nach einem der Ansprüche 1 bis 4.

6. Roboterrasenmäher (100) nach Anspruch 5, wobei mindestens ein Radarsendeempfänger (170) eine entsprechende Antennenanordnung (171) umfasst, die in einem Winkel (φ) zu einem Bodenniveau (G) derart gerichtet ist, dass ein gesendetes Radarsignal (180) in dem Winkel (φ) zu dem Bodenniveau (G) gerichtet ist, wobei der Winkel (φ) in dem Intervall von 30°-50° und mehr bevorzugt in dem Intervall von 40°-50° liegt.

7. Verfahren zum Steuern eines Roboterrasenmähers (100), das Verfahren umfassend
Senden (S100) einer Vielzahl von gesendeten Radarsignalwellenformen (180);
Empfangen (S200) einer Vielzahl von reflektierten Radarsignalwellenformen (181a, 181b, 181c; 181d, 181e, 181f), wobei die gesendeten Radarsignalwellenformen durch ein Objekt (182) reflektiert wurden;
Abtasten (S300) einer Vielzahl von empfangenen Radarsignalwellenformen (181a, 181b, 181c; 181d, 181e, 181f) mit mindestens einem Abtastpunkt (Sₐ, S_{b}, S_{c}; S_{d}, Sₑ, S_{f}) für jede empfangene Radarsignalwellenform (181a, 181b, 181c; 181d, 181e, 181f);
Analysieren (S400) der Abtastpunkte (Sₐ, S_{b}, S_{c}; S_{d}, Sₑ, S_{f}) als eine Funktion von Amplitude und Zeit; und
Steuern (S500) des Roboterrasenmähers (100), um sich in eine zweite Richtung (D₂) zu bewegen, wenn bestimmt wurde, dass eine Amplitudenänderung (ΔA₁, ΔA₂) zwischen entsprechenden Abtastpunkten (Sₐ, S_{b}, S_{c}; S_{d}, Sₑ, S_{f}) für unterschiedliche empfangene Radarsignalwellenformen (181a, 181b, 181c; 181d, 181e, 181f) unter einen Schwellenwert fällt, was anzeigt, dass sich der Roboterrasenmäher (100) nicht bewegt, wenn die Antriebsmotoranordnung (150) gesteuert wird, um den Roboterrasenmäher (100) in eine erste Richtung (D₁) zu bewegen, die sich von der zweiten Richtung (D₂) unterscheidet.

8. Verfahren nach Anspruch 7, wobei das Verfahren das Anhalten des Normalbetriebs des Roboterrasenmähers (100), bevor der Roboterrasenmäher (100) gesteuert wird, um sich in die zweite Richtung (D₂) zu bewegen, umfasst.

9. Verfahren nach einem der Ansprüche 7 oder 8, wobei das Verfahren das Analysieren der Leistungsspektraldichte im Laufe der Zeit für die Abtastpunkte (Sₐ, S_{b}, S_{c}; S_{d}, Sₑ, S_{f}) für unterschiedliche empfangene Radarsignalwellenformen (181a, 181b, 181c; 181d, 181e, 181f) derart umfasst, dass die aktuelle Art von Bodenmaterial bestimmt werden kann.

10. Computerprogramm (210) zum Steuern eines Roboterrasenmähers (100), wobei das Computerprogramm (210) Computercode umfasst, der, wenn er auf einem Verarbeitungsschaltkreis (115) einer Steuereinheitsanordnung (110) ausgeführt wird, die Steuereinheitsanordnung (110) veranlasst, das Verfahren nach einem der Ansprüche 7 bis 9 durchzuführen.

11. Computerprogrammprodukt (200), umfassend ein Computerprogramm (210) nach Anspruch 10 und ein computerlesbares Speichermedium (220), auf dem das Computerprogramm gespeichert ist.

## Revendications

1. Agencement d'unité de commande (110) de tondeuse à gazon robotique qui est conçu pour
- commander au moins un transcepteur radar (170) compris dans une tondeuse à gazon robotique (100) pour transmettre une pluralité de formes d'ondes de signal radar transmises (180) et pour recevoir une pluralité de formes d'ondes de signal radar (181a, 181b, 181c ; 181d, 181e, 181f) réfléchies où les formes d'ondes de signal radar transmises ont été réfléchies par un objet (182),
- échantillonner une pluralité de formes d'ondes de signal radar (181a, 181b, 181c ; 181d, 181e, 181f) reçues avec au moins un point d'échantillonnage (Sₐ, S_{b}, S_{c} ; S_{d}, Sₑ, S_{f}) pour chaque forme d'onde de signal radar (181a, 181b, 181c ; 181d, 181e, 181f) reçue,
- analyser les points d'échantillonnage (Sₐ, S_{b}, S_{c} ; S_{d}, Sₑ, S_{f}) en fonction de l'amplitude et du temps, et pour
- commander un agencement de moteur d'entraînement (150) de la tondeuse à gazon robotique (100) pour déplacer la tondeuse à gazon robotique (100) dans une seconde direction (D₂) lorsque l'agencement d'unité de commande (110) a déterminé qu'un changement d'amplitude (ΔA₁, ΔA₂) entre des points d'échantillonnage (Sₐ, S_{b}, S_{c} ; S_{d}, Sₑ, S_{f}) correspondants pour différentes formes d'ondes de signal radar (181a, 181b, 181c ; 181d, 181e, 181f) reçues descend en dessous d'un seuil, indiquant que la tondeuse à gazon robotique (100) ne se déplace pas, lorsque l'agencement de moteur d'entraînement (150) est commandé pour déplacer la tondeuse à gazon robotique (100) dans une première direction (D₁), différente de la seconde direction (D₂).

2. Agencement d'unité de commande (110) de tondeuse à gazon robotique selon la revendication 1, dans lequel l'agencement d'unité de commande (110) comprend une unité d'échantillonnage (125) qui est conçue pour fournir les points d'échantillonnage (Sₐ, S_{b}, S_{c} ; S_{d}, Sₑ, S_{f}) en échantillonnant une pluralité de formes d'ondes de signal radar (181a, 181b, 181c ; 181d, 181e, 181f) reçues avec au moins un point d'échantillonnage (Sₐ, S_{b}, S_{c} ; S_{d}, Sₑ, S_{f}) pour chaque forme d'onde de signal radar (181a, 181b, 181c ; 181d, 181e, 181f) reçue.

3. Agencement d'unité de commande (110) de tondeuse à gazon robotique selon l'une quelconque des revendications 1 ou 2, dans lequel l'agencement d'unité de commande (110) est conçu pour arrêter le fonctionnement normal de la tondeuse à gazon robotique (100) avant de commander l'agencement de moteur d'entraînement (150) pour déplacer la tondeuse à gazon robotique (100) dans la seconde direction (D₂).

4. Agencement d'unité de commande (110) de tondeuse à gazon robotique selon l'une quelconque des revendications précédentes, dans lequel l'agencement d'unité de commande (110) est conçu pour mettre en œuvre une analyse de densité spectrale de puissance au fil du temps pour les points d'échantillonnage (Sₐ, S_{b}, S_{c} ; S_{d}, Sₑ, S_{f}) pour différentes formes d'ondes de signal radar (181a, 181b, 181c ; 181d, 181e, 181f) reçues de telle sorte que le type actuel de matériau de sol peut être déterminé.

5. Tondeuse à gazon robotique (100) comprenant au moins un transcepteur radar (170), un agencement de moteur d'entraînement (150) et un agencement d'unité de commande (110) selon l'une quelconque des revendications 1 à 4.

6. Tondeuse à gazon robotique (100) selon la revendication 5, dans laquelle au moins un transcepteur radar (170) comprend un agencement d'antenne (171) correspondant qui est dirigé selon un angle (φ) par rapport à un niveau de sol (G) de telle sorte qu'un signal radar transmis (180) est dirigé selon l'angle (φ) par rapport au niveau de sol (G), où l'angle (φ) se trouve dans l'intervalle de 30° à 50°, et plus préférablement dans l'intervalle de 40° à 50°.

7. Procédé permettant de commander une tondeuse à gazon robotique (100), le procédé comprenant
la transmission (S100) d'une pluralité de formes d'ondes de signal radar transmis (180) ;
la réception (S200) d'une pluralité de formes d'ondes de signal radar (181a, 181b, 181c ; 181d, 181e, 181f) réfléchies où les formes d'ondes de signal radar transmises ont été réfléchies par un objet (182) ;
l'échantillonnage (S300) d'une pluralité de formes d'ondes de signal radar (181a, 181b, 181c ; 181d, 181e, 181f) reçues avec au moins un point d'échantillonnage (Sₐ, S_{b}, S_{c} ; S_{d}, Sₑ, S_{f}) pour chaque forme d'onde de signal radar (181a, 181b, 181c ; 181d, 181e, 181f) reçue ;
l'analyse (S400) des points d'échantillonnage (Sₐ, S_{b}, S_{c} ; S_{d}, Sₑ, S_{f}) en fonction de l'amplitude et du temps ; et
la commande (S500) de la tondeuse à gazon robotique (100) pour se déplacer dans une seconde direction (D₂) lorsque l'on a déterminé qu'un changement d'amplitude (ΔA₁, ΔA₂) entre des points d'échantillonnage (Sₐ, S_{b}, S_{c} ; S_{d}, Sₑ, S_{f}) correspondants pour différentes formes d'ondes de signal radar (181a, 181b, 181c ; 181d, 181e, 181f) reçues descend en dessous d'un seuil, indiquant que la tondeuse à gazon robotique (100) ne se déplace pas, lorsque l'agencement de moteur d'entraînement (150) est commandé pour déplacer la tondeuse à gazon robotique (100) dans une première direction (D₁), différente de la seconde direction (D₂).

8. Procédé selon la revendication 7, dans lequel le procédé comprend l'arrêt du fonctionnement normal de la tondeuse à gazon robotique (100) avant de commander la tondeuse à gazon robotique (100) pour se déplacer dans la seconde direction (D₂).

9. Procédé selon l'une quelconque des revendications 7 ou 8, dans lequel le procédé comprend l'analyse de densité spectrale de puissance au fil du temps pour les points d'échantillonnage (Sₐ, S_{b}, S_{c} ; S_{d}, Sₑ, S_{f}) pour différentes formes d'ondes de signal radar (181a, 181b, 181c ; 181d, 181e, 181f) reçues de telle sorte que le type actuel de matériau de sol peut être déterminé.

10. Programme informatique (210) permettant de commander une tondeuse à gazon robotique (100), où le programme d'ordinateur (210) comprend un code informatique qui, lorsqu'il est exécuté sur un système de circuits de traitement (115) d'un agencement d'unité de commande (110), amène l'agencement d'unité de commande (110) à mettre en œuvre le procédé selon l'une quelconque des revendications 7 à 9.

11. Produit programme informatique (200) comprenant un programme informatique (210) selon la revendication 10, et un support de stockage lisible par ordinateur (220) sur lequel le programme informatique est stocké.
